# EUROPEAN PATENT APPLICATION

(11) **EP 4 644 038 A1**
(43) Date of publication of application: **05.11.2025**
(21) Application number: 25167812.4
(22) Date of filing: 01.04.2025
(51) Int. Cl.: B23P 19/00, B25B 21/00, B25B 23/04, B25B 23/10

(54) **SCREW FEEDING DEVICE**

(30) Priority: 17.04.2024 TW 113114368
(71) Applicant: BASSO INDUSTRY CORP., Taichung 40768 (TW)
(72) Inventor: HUNG, Sunking, 40768 Taichung (TW); CHEN, Hung-da, 40768 Taichung (TW)
(74) Representative: Murgitroyd & Company

(57) **Abstract**

The present invention provides a screw feeding device including a nozzle assembly, a quick-release assembly, and a screw feeder body. The quick-release assembly is mounted on the nozzle assembly to allow it to be removably attached to the screw feeder body. The assembly includes a seat body, a pushing member, and an elastic member. The pushing member is movably placed in a sliding slot of the seat body and has a limiting groove with a tapered width. The elastic member is positioned in the limiting groove and has two linkage portions extending wider in the opposite direction. Each linkage portion is provided with a fixing pin, which are elastically positioned within a groove of a housing of the screw feeder body. When the pushing member moves relative to the elastic member, the elastic member deforms, causing the fixing pins to move closer and detach from the screw feeder body.

## Description

### CROSS-REFERENCE TO RELATED APPLICATIONS

This application claims priority to Taiwan Application Serial Number 113114368, filed on April 17, 2024, which is incorporated herein by reference.

### FIELD OF INVENTION

The invention relates to a screw feeding device, particularly to a screw feeding device having a quick-release assembly.

### BACKGROUND OF INVENTION

Screw automatic feeding tools, such as screw feeders, are commonly used in construction, decoration, and other workplaces. Among them, the screw feeder is a device that guides the intermittent feeding motion of a screw strip and provides a transmission function for screw fastening. After a screw feeder has been used for a period of time, it is usually necessary to remove the nozzle assembly of the screw feeder for cleaning to ensure smooth operation.

However, the nozzle assembly of a screw feeder requires tools for removal, and tools are also needed to install the nozzle assembly onto the screw feeder. Therefore, users must prepare additional tools or search for specialized tools for assembly and disassembly, which not only increases the inconvenience of carrying and operating but also poses a risk of damaging internal components during the process.

### SUMMARY OF INVENTION

One objective of the present invention is to provide a screw feeding device with a quick-release assembly, enabling users to quickly remove the nozzle assembly from a screw feeder body or install the nozzle assembly onto the screw feeder body without the need for any tools.

According to the aforementioned objective, a screw feeding device is provided. The screw feeding device comprises a nozzle assembly, a quick-release assembly, and a screw feeder body, in which the quick-release assembly is configured to be disposed on the nozzle assembly to allow the nozzle assembly to be detachably mounted on the screw feeder body. The quick-release assembly comprises a seat body, a pushing member and an elastic member. The seat body has a sliding slot. The pushing member is movably disposed within the sliding slot, in which a surface of the pushing member has a limiting groove, and a width of the limiting groove gradually narrows along a first direction. The elastic member is disposed within the limiting groove of the pushing member, in which the elastic member has two linkage portions extending in a second direction, opposite to the first direction, and gradually moving away from each other along the limiting groove. Each of the linkage portions is provided with a fixing pin, and the fixing pins are elastically positioned within a groove on an inner side of a housing of the screw feeder body. When the pushing member moves relative to the elastic member along the second direction, the elastic member is compressed and deformed by an inner wall of the limiting groove, thereby causing the fixing pins to move toward each other and disengage from the housing of the screw feeder body.

According to an embodiment of the present invention, the elastic member has a compression portion, and the linkage portions extend from the compression portion, and the compression portion is disposed within the limiting groove of the pushing member, and the linkage portions extend outward from a side of the limiting groove having a greater width.

According to an embodiment of the present invention, when the pushing member moves relative to the elastic member along the second direction, the linkage portions move toward each other along a direction perpendicular to the second direction.

According to an embodiment of the present invention, the elastic member is a linear elastic member, and the compression portion is formed by bending a middle part of the linear elastic member, and the linkage portions are formed by respectively bending two opposite ends of the linear elastic member.

According to an embodiment of the present invention, the two opposite ends of the linear elastic member are respectively inserted into and fixed within the fixing pins.

According to an embodiment of the present invention, the limiting groove is V-shaped, triangular, or trapezoidal in shape.

According to an embodiment of the present invention, a push portion is provided on the opposite surface of the pushing member relative to the surface.

According to the aforementioned embodiments of the present invention, the present invention provides a screw feeding device equipped with a quick-release assembly, which enables the nozzle assembly to be quickly disassembled and reassembled by hand without the need for tools, offering an intuitive and simple operation.

### DESCRIPTION OF DRAWINGS

FIG. 1 is a schematic diagram of a screw feeding device according to an embodiment of the present invention.
FIG. 2 is a schematic diagram showing a separated state of a nozzle assembly and a main body of the screw feeding device according to an embodiment of the present invention.
FIG. 3 is an exploded schematic diagram of the nozzle assembly according to an embodiment of the present invention.
FIGs. 4 and 5 are schematic diagrams illustrating the usage state of a quick-release assembly according to an embodiment of the present invention.

### DETAILED DESCRIPTION OF PREFERRED EMBODIMENTS

In order to make the above and other objects, features, and advantages of the present invention more comprehensible, preferred embodiments of the present invention will be described below in detail together with the attached drawings. Furthermore, the directional terms used in the present invention, for example, up, down, top, bottom, front, back, left, right, inside, outside, side, around, central, horizontal, transverse, vertical, longitudinal, axial, radial direction, the uppermost layer, or the lowermost layer, etc. are only the directions shown in the attached drawings. Therefore, the directional terms are only used to illustrate and express the present invention, but not to limit the present invention.

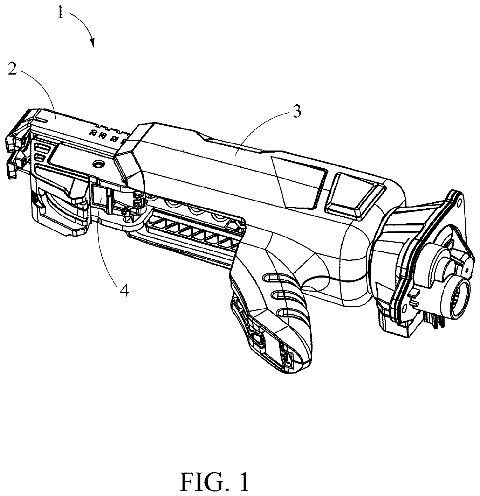

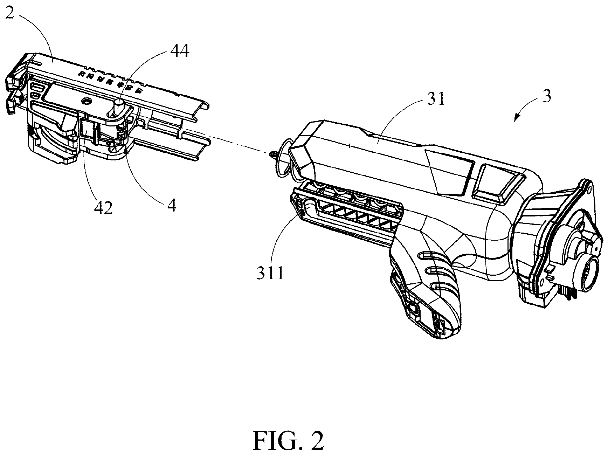

The present invention provides a tool device having a quick-release assembly. Specifically, the quick-release assembly can be mounted on a tool joint, allowing users to quickly detach the tool joint from the tool device or reinstall it without using additional tools. In the embodiment shown in FIGs. 1 and 2, the tool joint is a nozzle assembly 2 of a screw feeding device 1, while the tool device is a screw feeder body 3. The quick-release assembly 4 is mounted on the nozzle assembly 2. With this configuration, users can manually operate the quick-release assembly 4 to detach the nozzle assembly 2 from the screw feeder body 3. Similarly, the quick-release assembly 4 allows users to quickly reattach the nozzle assembly 2 to the screw feeder body 3.

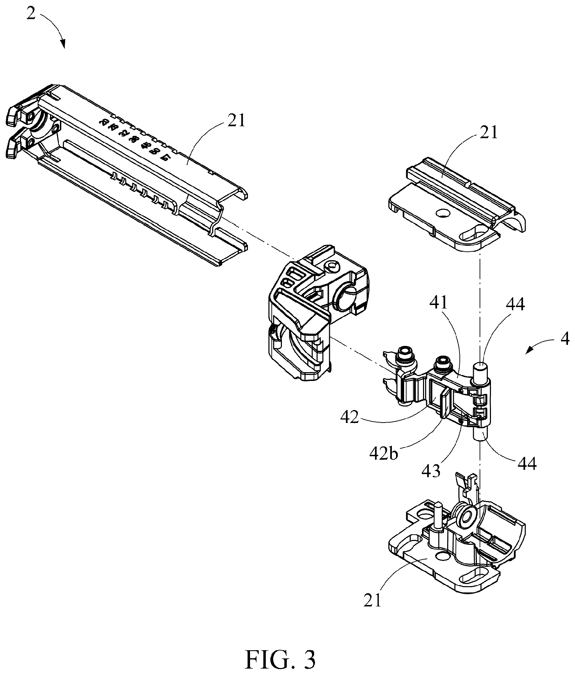

Specifically, as shown in FIGs. 1 and 2, the screw feeding device 1 includes the nozzle assembly 2 and the screw feeder body 3. The quick-release assembly 4 is mounted on nozzle assembly 2, enabling the nozzle assembly 2 to be easily detached from or attached to the screw feeder body 3. Referring to FIG. 3, in this embodiment, the quick-release assembly 4 is an integral part of the nozzle assembly 2. That is, the quick-release assembly 4 is directly integrated into a housing 21 of the nozzle assembly 2 and structurally fits the housing 21. In other embodiments, the quick-release assembly 4 can be additionally mounted on the nozzle assembly 2 as an external attachment to achieve the same function.

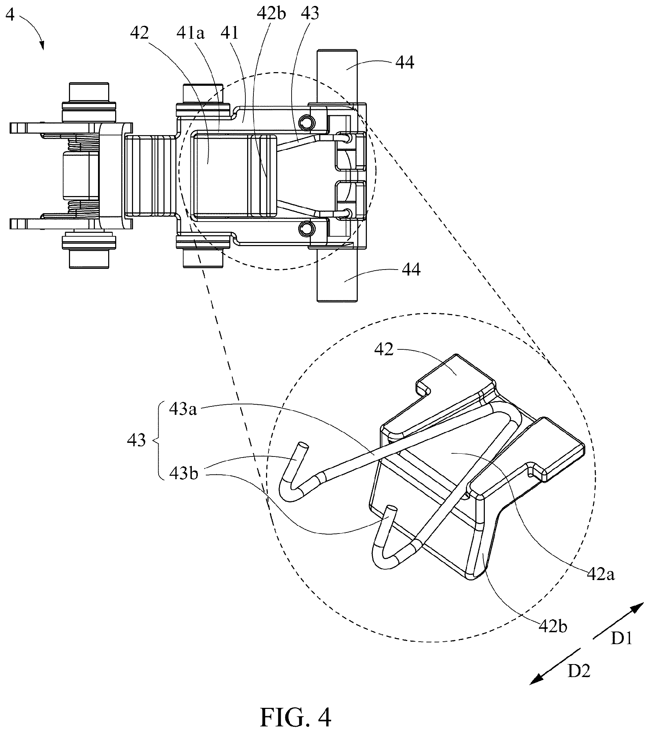

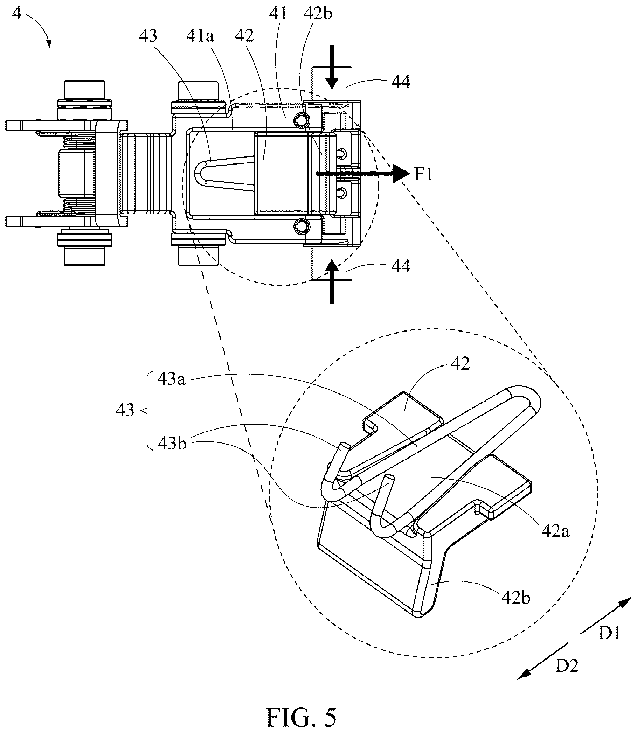

Referring to FIGs. 3 to 5, in which FIGs. 4 and 5 illustrate the top view of the quick-release assembly 4 and provide an enlarged view of a pushing member 42 with its bottom surface facing upward, illustrating the relative positions of an elastic member 43 and the pushing member 42. In this embodiment, the quick-release assembly 4 includes a seat body 41, the pushing member 42, and the elastic member 43. The seat body 41 has a sliding slot 41a, and the pushing member 42 is movably disposed in the sliding slot 41a. In one embodiment, the pushing member 42 can move along a first direction D1 or a second direction D2, opposite to the first direction D1, within the sliding slot 41a. As shown in FIGs. 4 and 5, opposing surfaces (e.g., the bottom surface and the top surface) of the pushing member 42 are respectively provided with a limiting groove 42a and a push portion 42b. The limiting groove 42a can be a tapered groove, such as a trapezoidal groove, triangular groove, or V-shaped groove, with its width gradually narrowing along the first direction D1. The push portion 42b can be a protrusion (or a recess) on the top surface of the pushing member 42, making it easier for the user to push the pushing member 42.

In this embodiment, the elastic member 43 is partially disposed in the limiting groove 42a. When the pushing member 42 moves relative to the elastic member 43, the inner walls of the limiting groove 42a constrain and deform the elastic member 43. Specifically, the elastic member 43 includes a compression portion 43a and two linkage portions 43b extending from the compression portion 43a. The compression portion 43a is positioned within the limiting groove 42a of the pushing member 42, while the linkage portions 43b extend along the second direction D2 of the limiting groove 42a, gradually separating from each other. In one embodiment, the linkage portions 43b extend outward from a wider side of the limiting groove 42a. Thus, as the pushing member 42 moves relative to the elastic member 43 along the first direction D1 or the second direction D2, the inner wall of the limiting groove 42a constrains the compression portion 43a, causing it to deform. This deformation causes the linkage portions 43b to move toward or away from each other along a direction perpendicular to both the first direction D1 and the second direction D2. In the present embodiment, a pair of fixing pins 44 are respectively mounted on the linkage portions 43b. The fixing pins 44 are elastically confined within the inner side of the housing 31 of the screw feeder body 3. As a result, when the linkage portions 43b move closer together due to the deformation of the compression portion 43a, the fixing pins 44 also move closer together, thereby disengaging from the housing 31 of the screw feeder body 3.

In the embodiment shown in FIGs. 4 and 5, the elastic member 43 is positioned between the pushing member 42 and the seat body 41. Specifically, the pushing member 42 is slidably fitted in the sliding slot 41a of the seat body 41 with its bottom facing the seat body 41, and the limiting groove 42a of the pushing member 42 accommodates and confines the elastic member 43 within the sliding slot 41a of the seat body 41. In this embodiment, the elastic member 43 is a V-shaped structure formed by bending a linear elastic element. That is, the compression portion 43a is formed by bending the middle part of the linear elastic element, while the linkage portions 43b are formed by bending the two opposing ends of the linear elastic element. The linkage portions 43b are respectively fixed to one end of the fixing pins 44, which are positioned at the inner end of the sliding slot 41a. The other ends of the fixing pins 44 extend out of the opposite sidewalls of the seat body 41, elastically engaging with the housing 31 of the screw feeder body 3.

This section will explain the operation and actuation method of the quick-release assembly 4. Referring to FIGs. 1 and 2, the nozzle assembly 2 is fixed to the screw feeder body 3 by the fixing pins 44 of the quick-release assembly 4, which are inserted into the groove 311 of the housing 31. At this position, the quick-release assembly 4 is in its initial state (for example, as shown in FIG. 4). To remove the nozzle assembly 2, as shown in FIG. 5, the user applies an external force F1 to the pushing member 42, thereby moving it along the second direction D2 relative to the elastic member 43. Meanwhile, the compression portion 43a of the elastic member 43 is compressed and deformed due to the gradually narrowing inner walls of the limiting groove 42a. This deformation causes the two fixing pins 44 to move closer together, thereby enabling the nozzle assembly 2 to be removed from the groove 311 of the housing 31. When the user releases the pushing member 42 (i.e., when the external force F1 is removed), the compression portion 43a of the previously compressed elastic member 43 returns to its original shape due to its elastic restoring force, thereby pushing the pushing member 42 back to its original position. Alternatively, the user can manually push the pushing member 42 back to its original position.

Moreover, when the nozzle assembly 2, which has been removed, is to be installed onto the housing 31 of the screw feeder body 3, the user can move the pushing member 42 along the second direction D2 relative to the elastic member 43. This causes the compression portion 43a of the elastic member 43 to compress and deform, which makes the two fixing pins 44 move closer together and retract into the seat body 41. Once the fixing pins 44 are retracted, they can be aligned with the groove 311 in the housing 31. Upon releasing the pushing member 42, the elastic restoring force of the compression portion 43a pushes the fixing pins 44 back into the groove 311. In some embodiments, the nozzle assembly 2 can be reinstalled by directly applying force to the external side of the fixing pins 44 to push them into the interior of the seat body 41, so that the nozzle assembly 2 can be inserted back into the housing 31 of the screw feeder body 3.

As described above, the present invention provides a screw feeding device equipped with a quick-release assembly, which enables the nozzle assembly to be quickly disassembled and reassembled by hand without the need for tools, offering an intuitive and user-friendly operation.

## Claims

1. A screw feeding device (1), comprising a nozzle assembly (2), a quick-release assembly (4), and a screw feeder body (3), **characterized in that** the quick-release assembly (4) is configured to be disposed on the nozzle assembly (2) to allow the nozzle assembly (2) to be detachably mounted on the screw feeder body (3), and the quick-release assembly (4) comprises:
a seat body (41) having a sliding slot (41a);
a pushing member (42) movably disposed within the sliding slot (41a), wherein a surface of the pushing member (42) has a limiting groove (42a), and a width of the limiting groove (42a) gradually narrows along a first direction (D1), and
an elastic member (43) disposed in the limiting groove (42a) of the pushing member (42), wherein the elastic member (43) has two linkage portions (43b) extending in a second direction (D2), opposite to the first direction (D1), and gradually separating away from each other along the limiting groove (42a), and each of the linkage portions (43b) is provided with a fixing pin (44), and the fixing pins (44) are elastically positioned within a groove (311) on an inner side of a housing (31) of the screw feeder body (3), and when the pushing member (42) moves relative to the elastic member (43) along the second direction (D2), the elastic member (43) is compressed and deformed by an inner wall of the limiting groove (42a), thereby causing the fixing pins (44) to move toward each other and disengage from the housing (31) of the screw feeder body (3).

2. The screw feeding device according to claim 1, **characterized in that** the elastic member (43) has a compression portion (43a), the linkage portions (43b) extend from the compression portion (43a), the compression portion (43a) is disposed within the limiting groove (42a) of the pushing member (42), and the linkage portions (43b) extend outward from a side of the limiting groove (42a) having a greater width.

3. The screw feeding device according to claim 2, **characterized in that** when the pushing member (42) moves relative to the elastic member (43) along the second direction (D2), the linkage portions (43b) move toward each other along a direction perpendicular to the second direction (D2).

4. The screw feeding device according to claim 2, **characterized in that** the elastic member (43) is a linear elastic member (43), and the compression portion (43a) is formed by bending a middle part of the linear elastic member, and the linkage portions (43b) are formed by respectively bending two opposite ends of the linear elastic member.

5. The screw feeding device according to claim 4, **characterized in that** the two opposite ends of the linear elastic member are respectively inserted into and fixed within the fixing pins (44).

6. The screw feeding device according to claim 1, **characterized in that** the limiting groove (42a) is V-shaped, triangular, or trapezoidal in shape.

7. The screw feeding device according to claim 1, **characterized in that** a push portion (42b) is provided on another surface of the pushing member (42) opposite to said surface.
